# EUROPEAN PATENT APPLICATION

(11) **EP 1 172 037 A1**
(43) Date of publication of application: **16.01.2002**
(21) Application number: 00830583.1
(22) Date of filing: 18.08.2000
(51) Int. Cl.: A23C 19/093

(54) **Creamy food preparation based on hard cheese**

(30) Priority: 11.07.2000 IT MI001568
(71) Applicant: Genuine Foods s.n.c., di Maria Rita Gasparelli & C., 43100 Parma (IT)
(72) Inventor: Gasparelli, Maria Rita, 43100 Parma (IT); Gasparelli, Roberto, 43040 Varano de'Melegari (Parma) (IT); Allodi, Andrea, 43029 Traversetolo (Parma) (IT)
(74) Representative: Ferreccio, Rinaldo

(57) **Abstract**

A creamy food preparation comprising, in weight percentage on the total weight, at least 60 % of finely divided and non-melt hard cheese, preferably Parmigiano-Reggiano, water and at least one food oil or fat, the water and said at least one food oil or fat being in a weight ratio 7:1 to 9:1; this preparation has organoleptic characteristics which are comparable to those of the Parmigiano-Reggiano from which it is obtained for a period of at least four weeks at room temperature.

## Description

In its broader aspect the present invention relates to the field of the milk-dairy food industry.

In particular the present invention relates to a creamy food preparation based on hard cheese and in particular on Parmigiano-Reggiano cheese.

Even if, from now on, for an easier explanation, reference will only be made to Parmigiano-Reggiano, it shall be intended that what disclosed and claimed extends also to analogous hard cheeses, such as for example Grana, in particular Grana Padano, Sardinian Pecorino, Roman Pecorino, Sbrinz and so on.

It is well known that Parmigiano-Reggiano is a cheese characterized by absolutely peculiar organoleptic and nutritional properties.

As far as the nutritional properties are concerned, Parmigiano-Reggiano distinguishes itself from other kind of cheese for its very high protein content, higher than 36 % and for the relatively low content of lipids (about 28 %). Moreover, it contains great amounts of calcium (1.3 %), phosphorous (0.7 %) and vitamins.

The natural process of ripening to which the Parmigiano-Reggiano is subjected renders the nutritional principles extremely assimilable by the human body.

These brilliant nutritional properties are further associated to unique organoleptic properties, which have made Parmigiano-Reggiano famous all over the world both as table cheese and as an indispensable ingredient in a number of culinary recipes.

As known, Parmigiano-Reggiano is shipped for sale as a whole cheese characterized by an approximate weight of 30 kg, which must be then cut in slices, which are never the one equal to the other, with a not negligible effort and a time-consuming operation by the retailer. Moreover, the weight of the cut portion seldom corresponds to the one asked for by the customer and includes also the weight of the cheese rind, which is actually not edible.

At big department stores, instead, Parmigiano Reggiano is sold as pre-cut pieces, packaged under vacuum, what determines a slight deterioration of is organoleptic properties.

Hence, the problem of the transport and subdivision in smaller portions of Parmigiano-Reggiano is one of the factors which more prevent a wide diffusion thereof, in particular outside Italy.

Foreign customers buy Parmigiano Reggiano mainly in form of already grated cheese inside vacuum bags; however the organoleptic properties of such a product are of a remarkably worse quality than those of Parmigiano Reggiano as such.

Finally, even if often appreciated by a lot of customers, a characteristic of Parmigiano Reggiano may instead create a problem for other customers. Such characteristic is the rather hard consistency of the cheese, which can seriously inhibit its consumption by babies and young kids and by old people with mastication problems.

This is a not negligible drawback for a food which is otherwise extremely adapted to be consumed by the aforementioned groups of people, just by virtue of its excellent nutritional properties.

The only known way for permitting Parmigiano-Reggiano to be eaten by people with mastication problems is that of grating it and incorporating it in food such as vegetable soups, cereal and legumes cremes and the like.

In this way, however, the consumer is deprived of the pleasure of appreciating the strong and unique taste of Parmigiano-Reggiano as such.

A solution to the above mentioned drawback could be that of preparing a melt cheese based on Parmigiano-Reggiano; however, the high temperatures needed for melting the Parmigiano-Reggiano inevitably cause the deterioration of the organoleptic properties of such cheese.

### Summary of the invention

The problem underlying the present invention is that of providing a food preparation based on hard cheese, in particular Parmigiano-Reggiano, which, while keeping organoleptic properties identical to those of such cheese, overcomes the aforementioned constraints to consumption of Parmigiano-Reggiano.

Such a problem is solved, according to the present invention, by a creamy food preparation comprising, in weight percentage on the total weight, at least 60 % of finely divided and non-melt hard cheese, water and at least one food oil or fat, the water and said at least one food oil or fat being in a weight ratio from 7:1 to 9:1.

The above-mentioned hard cheese is chosen from the group comprising Parmigiano-Reggiano, Grana Padano, Grana in general, Sardinian Pecorino, Roman Pecorino, and Sbrinz and preferably consists of Parmigiano-Reggiano.

Preferably, said preparation also comprises an emulsifier in an amount comprised between 0.01 and 1 %, advantageously between 0.05 and 0.5 %.

The emulsifier can be chosen from the group comprising lecithin, mono- and diglycerides of food fatty acids, esters of fatty acids and propionate, esters of fatty acids and sorbitan. Advantageously soybean lecithin is used.

Water preferably constitutes from 25 to 30 % of the total weight of the preparation according to the invention.

The food oil or fat preferably constitutes from 3 to 5 % of the total weight of the preparation and may be selected from the group comprising olive, maize, grape seed, peanut, soybean, sunflower, safflower oil, vegetable margarine. Olive oil is particularly preferred.

The preparation according to the invention may further advantageously contain a humectant selected from the group comprising polyols and saccharides. In particular, it is convenient to use mono- and disaccharides, such as fructose, glucose, saccharose or polyols such as sorbitol and mannitol, in an amount comprised between 1 and 5 %, preferably 1-3 %, of the total weight of the preparation according to the invention.

Saccharose is particularly preferred as the humectant.

Moreover, adding a stabilizing agent to the preparation according to the invention may prove useful, whereby such an agent is selected from the group comprising natural food gums and starches, in an amount comprised between 1 and 5 % w/w on the total weight of the preparation. The use of a cold gelling starch is particularly preferred, such as for example the Ultrasperse starch of the National Starch and Chemical Company.

Finally, the incorporation of natural antioxidant agents, such as vitamin E and esters thereof, ascorbic acid and esters thereof, α and β-carotene, lycopene and polyphenols, in the preparation according to the invention has proven to be advantageous. This provision, besides providing valuable vitamin elements, is also useful for increasing the stability of the preparation according to the invention with respect to oxidations, aiding the prevention of rancidification phenomena. The total amount of such antioxidant agents inside the creamy preparation according to the invention varies from 0.6 % to 3.0 %.

In order to further increase the stability of the preparation according to the invention, adding reduced amounts of acidifying agents, selected from the group comprising citric acid, tartaric acid, phosphoric acid, malic acid and lactic acid, may prove convenient. Citric acid is particularly preferred.

The acidifying agent may be added in an amount comprised between 0.15 and 0.9 % by weight, in order to provide the creamy preparation with a pH in the range between 3 and 5.

The food preparation according to the invention is prepared according to a process which comprises the steps of:
- grating a hard cheese, in particular Parmigiano-Reggiano, obtaining a powder;
- mixing at room temperature one part of said powder with 0.4-0.6 parts of a 7:1-9:1 water/food oil or fat mixture until a creamy mixture is obtained;
- subjecting said mixture to homogenization, obtaining a cream containing solid particles of such a size as not to be perceived by the tongue or by the palate of a consumer.

Possible additional ingredients, such as emulsifiers, humectants, stabilizers and acidifying agents, are added in the mixing step.

The mixing step is carried out inside mixers of conventional type, preferably comprising a mixing container and means for scraping the inner surface of such a container. In case, the mixer can be provided with heat exchangers adapted for ensuring that the melting point of the cheese is never reached.

The homogenization step is preferably carried out in a two-step valve homogenizer, subjecting the creamy mixture coming from the mixing step to a cumulative pressure comprised between 6•10⁶ Pa and 8.5•10⁶ Pa. Preferably the first homogenization step is carried out at a pressure of about 3.2•10⁶ Pa - 3.6•10⁶ Pa and the second step at a pressure comprised between 2.4•10⁶ Pa and 5.3•10⁶ Pa.

Alternatively, the homogenization may be carried out by means of a colloidal mill provided with rotor which rotates at a speed of 15000-18000 rpm and with a cooling circuit.

The creamy food preparation so obtained has a velvety consistency and maintains unchanged the flavor and taste typical of the original cheese, thanks to the extreme delicacy of the preparation process used, which does not imply any heating step.

Such a preparation is extremely versatile, because it lends itself to be eaten as such, or otherwise spread on bread, toasted bread and the like, or also as a filling for cream puffs, vol-au-vents and canapés or in the preparation of filled toasts. Further on, it can be used together with salami and pork salted meat of any kind, as a seasoning for pasta, rice and boiled vegetables, both as such and as added with other ingredients, such as nutmeg, minced nuts, chive, mushrooms, truffles, and so on, or it can be added as a final touch to roasted meats and vegetables.

Furthermore, the food preparation according to the present invention lends itself optimally to be deep-frozen without damage to its organoleptic properties. Therefore it can be a pre-cooked sauce which can be unfrozen in a few seconds in a microwave oven or be part of the toppings of frozen pizzas or last but not least be an ingredient of savory cakes and of preparations based on frozen vegetable to be cooked in pan.

In conclusion, the food preparation according to the present invention allows to remarkably increase the number of ways a traditional product such as Parmigiano-Reggiano may be used, making it popular at the same time also among those people (especially abroad) that have never consumed it before, giving them the chance of knowing and enjoying a cheese, that, justly, has been defined the "king of all cheeses".

### Detailed description of the invention

Further advantages of the food preparation according to the present invention will become clearer from the examples provided hereinbelow for illustrative and not limiting purposes.

### EXAMPLE 1

| | |
|---|---|
| Parmigiano-Reggiano (47.39% of dry material) | 67.7 % |
| Water | 27.0 % |
| Olive oil | 3.4 % |
| Saccharose | 1.7 % |
| Soybean lecithin | 0.2 % |

The above mentioned ingredients (5 kg in total) were fed into a planetary mixer and subjected for about 1 minute to mixing at high velocity at room temperature (20 °C), obtaining a homogeneous mixture of creamy consistency.

The creamy mixture so obtained was then fed into a two-step valve homogenizer, applying in the first step a pressure of 3.4•10⁶ Pa and in the second step a pressure of 4.2•10⁶ Pa, respectively.

The creamy food preparation at the outlet of the homogenizer had a temperature around 40 °C; after cooling it down to room temperature, the creamy preparation was packaged inside pots of dark glass, which had been previously sterilized.

### EXAMPLE 2

| | |
|---|---|
| Parmigiano-Reggiano (42.70% of dry material) | 61.0 % |
| Water | 30.0 % |
| Olive oil | 3.7 % |
| Saccharose | 2.5 % |
| Ultrasperse® starch | 2.5 % |
| Soybean lecithin | 0.3 % |

The above reported ingredients were mixed in the same way as for example 1, after having previously dispersed the Ultrasperse starch in water, and the creamy mixture so obtained was then fed into a two-step valve homogenizer, applying in the first step a pressure of 3.6•10⁶ Pa and in the second step a pressure of 4.4•10⁶ Pa, respectively.

The creamy food preparation at the outlet of the homogenizer had a temperature around 40 °C; after cooling it down to room temperature, the creamy preparation was packaged inside previously sterilized pots of dark glass.

### EXAMPLE 3

| | |
|---|---|
| Parmigiano-Reggiano (42.70% of dry material) | 64.0 % |
| Water | 24.3 % |
| Grape seed oil | 3.5 % |
| Glucose | 3.5 % |
| Ultrasperse® starch | 2.0 % |
| Vitamin E | 0.5 % |
| Beta carotene | 0.3 % |
| Ascorbic acid | 0.8 % |
| Citric acid | 0.8 % |
| Soybean lecithin | 0.3 % |

The mixing of the ingredients was carried out as for example 1, as well as the following homogenization of the creamy mixture. In this case as well, the creamy food preparation at the outlet of the homogenizer had a temperature around 40 °C and after cooling it down to room temperature, the creamy preparation was packaged inside previously sterilized pots of dark glass.

### EXAMPLE 4

| | |
|---|---|
| Parmigiano-Reggiano (46.40% of dry material) | 68.6 % |
| Water | 26.0 % |
| Olive oil | 3.5 % |
| Saccharose | 1.7 % |
| Soybean lecithin | 0.2 % |

The mixing of the ingredients was carried out as for example 1, as well as the following homogenization of the creamy mixture. In this case as well, the creamy food preparation at the outlet of the homogenizer had a temperature around 40 °C and after cooling it down to room temperature, the creamy preparation was packaged inside previously sterilized pots of dark glass.

### TESTS OF ORGANOLEPTIC EVALUATION

The organoleptic characteristics of the creamy preparations of examples 1-3 were evaluated by a selected and trained panel of 21 individuals aged 20-30 y.o. , who where asked to evaluate the differences between the samples of the creamy preparation and a reference sample, which was the Parmigiano-Reggiano itself which had been used as ingredient of the preparations.

After appropriate training sessions, the tasters were asked to indicate on a fixed linear scale for each sample the distance from the sample of reference (Parmigiano-Reggiano). Then scores were computed, setting the extremes of the scale to be falling in the range 0 to 100. A value equal to 100 means total loss of the organoleptic characteristics typical of Parmigiano-Reggiano and a value equal to 0 means complete coincidence between the organoleptic characteristics of the samples and those of the reference.

The results provided by the tasters were submitted to statistical validation, obtaining at the end the results summed up in the following table.

**TABLE**

| Sample | After 1 day at 20 °C | After 28 days at 20 °C |
|---|---|---|
| Example 1 | 11 | 23 |
| Example 2 | 13 | 19 |
| Example 3 | 14 | 17 |

As it can be noted from the Table, all the samples (packaged in pots of dark glass and kept at 20 °C) have shown organoleptic characteristics very close to those of the original Parmigiano-Reggiano. It can also be noted that the preparation according to example 3, that contains antioxidants, acidifying agents and stabilizers, tends to maintain to a greater extent the initial organoleptic characteristics, that are only slightly lower than those of the preparation according to example 1, that does not contain such additives.

The preparation according to example 2 has characteristics intermediate between those of example 1 and 3.

The tasters were also asked to judge the softness at palate and the silkiness of the creamy preparations according to the examples after 1 and 28 days, respectively, at 20 °C. According to the surveyors, all the samples tested have exhibited excellent characteristics of softness to the palate and silkiness both after 1 day and after 28 days at 20 °C.

### EVALUATION OF THE PRESERVABILITY

The same samples used for the tests of organoleptic evaluation have been submitted also to microbiological and chemical-physical analysis for assessing their stability with time.

From the microbiological point of view, the total bacterial charge after 1 and 28 days at 20 °C, respectively, was determined, noticing an increase of the bacterial charge after 28 days not greater than a 10³ factor. The absolute value of the bacterial charge of each sample after 28 days at 20°C fell however fully in the limits set by the rules in force as far as food preserves.

As far as the chemical-physical analysis is concerned, first of all the possible presence of a phase separation was investigated in the samples stored at 20 °C for 28 days. No phase separation in the samples tested was observed.

Finally, the resistance to oxidation within a time frame of 28 days of the samples according to examples 1-3 was evaluated, determining the number of peroxides after 1 and 28 days, respectively. No statistically significant difference was observed between the number of peroxides measured after 1 day at 20 °C (substantially identical to that of the Parmigiano-Reggiano used in the preparation) and the one measured after 28 days at 20 °C for some of the samples assayed.

## Claims

1. A creamy food preparation comprising, in weight percentage on the total weight, at least 60 % of finely divided and non-melt hard cheese, water and at least one food oil or fat, the water and said at least one food oil or fat being in a weight ratio 7:1 to 9:1.

2. A creamy food preparation according to claim 1, wherein said hard cheese is selected from the group comprising Parmigiano-Reggiano, Grana Padano, Sardinian Pecorino, Roman Pecorino, Sbrinz and Grana cheese in general.

3. A food preparation according to claim 2, wherein said hard cheese is Parmigiano-Reggiano.

4. A food preparation according to claim 3, further comprising an emulsifier in an amount comprised between 0.01 and 1 %.

5. A food preparation according to claim 4, wherein said emulsifier is selected from the group comprising lecithin, mono- and diglycerides of food fatty acids, esters of fatty acids and propionate, esters of fatty acids and sorbitan.

6. A food preparation according to claim 5, wherein water constitutes from 25 to 30 % of the total weight.

7. A food preparation according to claim 6, wherein said at least one food oil or fat constitutes 3 to 5 % of the total weight of the preparation and is selected from the group comprising olive, maize, grape seed, peanut, soybean, sunflower, safflower oil and vegetable margarine.

8. A food preparation according to claim 7, further comprising a humectant selected from the group comprising mono- and disaccharides, such as fructose, glucose, saccharose or polyols such as sorbitol and mannitol, in an amount comprised between 1 and 5 % weight of the total weight of the preparation.

9. A food preparation according to claim 8, further comprising a stabilizing agent selected from the group comprising natural food gums and starches, in an amount comprised between 1 and 5 % weight on the total weight of the preparation.

10. A food preparation according to claim 9, wherein said stabilizing agent is a cold gelling modified starch.

11. A preparation according to any one of the preceding claims, further comprising at least one natural antioxidant agent, selected from the group comprising vitamin E and esters thereof, ascorbic acid and esters thereof, α and β-carotene, lycopene and polyphenols.

12. A preparation according to any one of the preceding claims, further comprising an acidifying agent, selected from the group comprising citric acid, tartaric acid, phosphoric acid, malic acid and lactic acid.

13. A process for the production of a food preparation according to any one of the preceding claims, which comprises the steps of:
- grating a hard cheese, obtaining thus a powder;
- mixing at room temperature one part of said powder with 0.4-0.6 parts of a 7:1-9:1 water/food oil or fat mixture until a creamy mixture is obtained;
- subjecting said mixture to homogenization, obtaining a cream containing solid particles of such a size as not to be perceived by the tongue or by the palate of a consumer.

14. A process according to claim 13, wherein said hard cheese is Parmigiano-Reggiano or Grana Padano.

15. A process according to claim 13 or 14, comprising adding further ingredients chosen among emulsifiers, humectants, stabilizers and/or acidifying agents in said mixing step.

16. A process according to any one of claims 13 to 15, wherein said homogenization step is carried out in a two-step homogenizer, subjecting the creamy mixture coming from the mixing step to a cumulative pressure comprised between 6•10⁶ Pa and 8.5•10⁶ Pa.
